# EUROPÄISCHE PATENTSCHRIFT

(11) **EP 0 482 357 B1**
(45) Veröffentlichungstag und Bekanntmachung des Hinweises auf die Patenterteilung: **24.04.1996**
(21) Anmeldenummer: 91116021.6
(22) Anmeldetag: 20.09.1991
(51) Int. Cl.: B41F 13/08

(54) **Biegeschwingungsdämpfer für Zylinder in Rotationsdruckmaschinen**
Bending oscillations damper for a cylinder in a rotary press
Amortisseur d'oscillations de flexion pour cylindre dans une presse rotative

(30) Priorität: 19.10.1990 DE 4033278
(43) Veröffentlichungstag der Anmeldung: 29.04.1992
(73) Patentinhaber: Heidelberger Druckmaschinen Aktiengesellschaft, D-69019 Heidelberg (DE)
(72) Erfinder: Gerstenberger, Markus, W-6902 Sandhausen (DE); Raasch, Gerd, W-6902 Sandhausen (DE)
(74) Vertreter: Stoltenberg, Baldo Heinz-Herbert

(56) Entgegenhaltungen:
- EP-A- 0 103 101
- EP-A- 0 103 102
- DE-C- 3 527 711
- GB-A- 2 073 368
- US-A- 4 125 073
- WORLD PATENTS INDEX LATEST Section PQ, Week 8429, Derwent Publications Ltd., London, GB; Class P86, AN 84-177953 & DE-A- 3 338 571 (VEB ZERKLEINERUNGSM.) 12. Juli 1984

## Beschreibung

Die Erfindung betrifft eine Vorrichtung zur Dämpfung von Biegeschwingungen von Druckwerkzylindern mit in den Druckwerkzylindern angeordneten Massen, die durch einen nach dem überrollen von Zylinderkanälen auftretenden Stoß über den Mantel der Druckwerkzylinder in Bewegung versetzbar sind, mit einer Schwingungen übertragenden Halterung, an welche die parallel zum Zylinderkanal angeordneten Massen befestigt sind, die von einer im Inneren des Zylindermantels befindlichen Dämpfungsmasse umgeben sind, in welche die Schwingungen der Massen dissipiert werden.

Aus dem Stand der Technik, der DE-PS 35 27 711, sind Druckwerkszylinder alt einer Vorrichtung zur Reduzierung der durch die Kanalüberrollung angeregten Dreh- und Biegeschwingungen bekannt. Einem Dämpfungssystem werden über Stege Schwingungen zugeführt. Das Dämpfungssystem umfaßt Dämpfungselemente aus Dreh- und Biegefedern, die an Armen am Steg befestigt sind. Die Dämpfungselemente sollen die eingeleiteten Schwingungen absorbieren. Darüber hinaus enden Schenkel der Dämpfungselemente dicht unterhalb des Zylindermantels. über auf diese Weise zwischen Zylindermantel und Schenkel des Dämpfungselementes gebildete Stoßstellen soll der bei der Kanalüberrollung auftretende elastische Stoß dem Dämpfungssystem zugeleitet und absorbiert werden.

Da es sich hier um kombinierte Dreh- und Biegeschwingungsdämpfer handelt, die außerdem noch Radial- bzw. Drehstöße aufnehmen und reduzieren sollen, sind sie zur Dämpfung einer speziellen Schwingungsform, beispielsweise der Biegeschwingung eines Druckwerkszylinders, nur bedingt geeignet. Ein kombinierter Dreh- und Biegeschwingungsdämpfer kann nur einen Kompromiß darstellen und beispielsweise angeregte Zylinderbiegeschwingungen nur unzureichend reduzieren. Das kombinierte Dreh- und Biegeschwingungsdämpfungssystem bringt zudem eine komplexere Geometrie mit sich, welche das System zu komplexen, nicht definierten Eigenschwingungsformen anregt. Diese sind jedoch höchst unerwünscht.

EP- A-0 103 102 zeigt eine Vorrichtung zur Reduzierung der durch die Kanalüberrollung in einem Druckwerkzylinder angeregten Biegeschwingungen. An einem in der Mitte des Druckwerkzylinders vorgesehenen Steg sind Absorberstäbe aufgenommen, an deren Enden sich Zusatzmassen befinden. Die Zusatzmassen können mit schaufelartigen Vorsprüngen versehen sein, die in die sie umgebende Dämpfungsmasse eingebettet sind. Die Dämpfungsmasse ist innerhalb des Zylindermantels gekapselt angeordnet.

Ausgehend vom angeführten Stand der Technik liegt der Erfindung die Aufgabe zugrunde, die durch Kanalüberrollung induzierten Biegeschwingungen sowohl deren Eigenschwingungsformen als auch die höheren Harmonischen zu reduzieren und Farbdichteschwankungen im Druck auszuschließen.

Die Aufgabe wird durch die Merkmale des Patentanspruches 1 gelöst.

Der Vorteil dieser Lösung ist darin zu sehen, daß durch die breitbandig abstimmbaren Dämpfer eine Rückstellkraft auf den Druckwerkszylinder ausgeübt wird, die der Zylinderschwingung und Pressungsänderungen zwischen den Druckwerkszylindern entgegenwirkt. Die erzeugte Rückstellkraft bewirkt eine Verminderung der Schwingungsamplituden um einen beträchtlichen Betrag ihrer ursprünglichen Amplitude.

Die im Dämpfer ausgebildeten Hohlräume werden mit Fluiden höherer Viskosität befüllt. Die Verwendung von Fluiden erlaubt eine breitbandige Abstimmung der Dämpfungscharakteristik der Dämpfer. Durch Befüllen der Hohlräume mit Fluiden unterschiedlicher Viskosität kann eine Feinabstimmung der Dämpfercharakteristik vorgenommen werden, bei der auch die Eigenschaften der auf Druckwerkszylinder spannbaren Bezüge berücksichtigt werden können.

In Weiterführung des der Erfindung zugrundeliegenden Gedankens sind die Massen als Biegestäbe ausgebildet, deren axiale Erstreckung ihren Durchmesser um ein Mehrfaches übersteigt. Ein Dämpfer - bestehend aus Biegestäben in den mit dem Dämpfungsfluid befüllten Hohlräumen - kann sowohl konzentrisch als auch exzentrisch zur Rotationsachse der Druckwerkzylinder gelagert sein.

Es besteht ebenfalls die Möglichkeit, solche Dämpfer dem Kanal eines Druckwerkzylinders gegenüber liegend anzuordnen.

In der Zeichnung ist eine Ausführung der Erfindung beschrieben, wobei
- Fig. 1: die Druckwerkskonfiguration einer Rollenrotationsdruckmaschine,
- Fig. 2: die Anordnung und Ausbildung der Dämpfer im Druckwerkszylinder,
- Fig. 3: Ausschwingkurven eines Druckwerkszylinders mit und ohne Dämpfung und
- Fig.4: Einbauvariante von Zusatzmassen
wiedergeben.

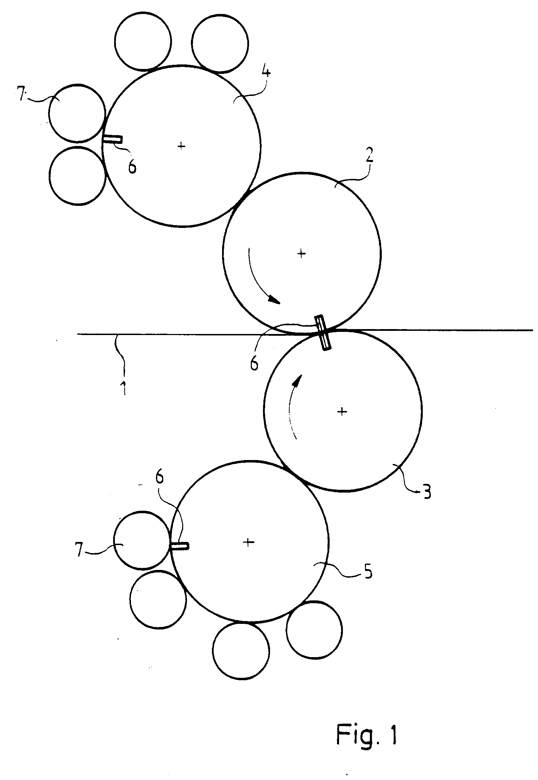

Fig. 1 zeigt eine Druckwerkskonfiguration einer Rollenrotationsdruckmaschine. Die durch das Druckwerk laufende Papierbahn 1 wird durch die Druckwerkzylinder 2 und 3 beidseitig bedruckt. Die weiteren Druckwerkzylinder 4 und 5 weisen ebenso wie die Druckwerkzylinder 2 und 3 achsparallele Kanäle 6 auf, die Spanneinrichtungen zum Fixieren von Zylinderbezügen aufnehmen. An den weiteren Druckwerkzylindern 4 und 5 sind die Farbauftragswalzen 7 gezeigt, die die Druckform einfärben. Der übersichtlichkeit halber sind die Schmitzringe, auf denen die Druckwerkzylinder und die weiteren Druckwerkzylinder ablaufen, nicht dargestellt.

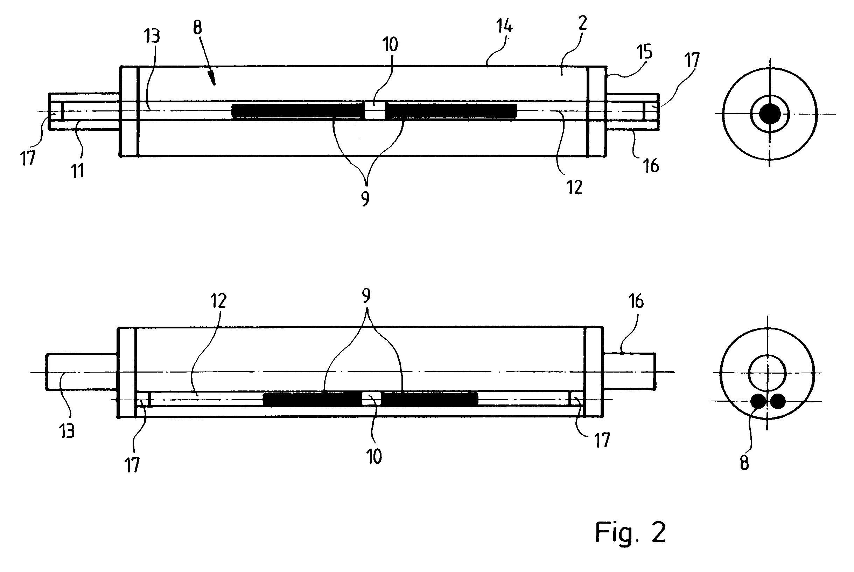

Fig. 2 zeigt Dämpfer 8 im eingebauten Zustand. Schlanke Biegestäbe 9 sind in der Mitte eines Druckwerkszylinders 2 in einer Halterung 10 befestigt. Aus Gründen der besseren Montierbarkeit können die schlanken Biegestäbe 9 leicht konisch ausgebildet sein. Der nach Montage der schlanken Biegestäbe 9 an der Halterung 10 in der Bohrung 11 verbleibende Hohlraum 12 wird mit einem Fluid gefüllt. Dieses Fluid, dessen Viskosität je nach gewünschter Dämpfungscharakteristik bzw. Feinabstimmung der Zylinderbiegeeigenfrequenz ausgewählt werden kann, trägt zur breitbandigeren Abstimmung des Dämpfungssystems bei. Es kann sich dabei um viskoses Mineralöl handeln oder um Silikonöl, welches in der Lage ist, große Scherkräfte aufzunehmen.

Im folgenden sei kurz die Wirkungsweise der erfindungsgemäßen Vorrichtung beschrieben. Bei der Kanalüberrollung der Druckwerkzylinder 2, 3 werden diese Druckwerkszylinder zu Biegeschwingungen angeregt. Da die Zylinderlager und die Schmitzringe eine versteifende Wirkung ausüben, kommt es in der Mitte der Druckwerkszylinder 2, 3 zu den größten Durchbiegungen der Druckwerkszylinder. Da in der Mitte der Druckwerkszylinder 2 und 3 die Halterung 10 angeordnet ist, die die schlanken Biegestäbe 9 aufnimmt, folgt diese Halterung 10 der Zylinderdurchbiegung bei der Anregung. Die Bewegung der Druckwerkszylinder 2, 3 wird auf die Halterung 10 übertragen. Somit führt die Halterung 10 die gleiche Auslenkung aus, die der Druckwerkszylinder erfährt. Die träge Masse der schlanken Biegestäbe 9 bewirkt nun, daß die Endabschnitte der schlanken Biegestäbe 9 erst dann ausgelenkt werden, wenn der betreffende Druckwerkszylinder in die entgegengesetzte Richtung, bezogen auf seine erste Auslenkung, ausschwingt. Zu diesem Zeitpunkt sind die Auslenkungen der Druckwerkszylinder 2, 3 und die der Endabschnitte der schlanken Biegestäbe 9 einander entgegengesetzt. Diese gegenphasige Auslenkung nach der Schwingungsanregung bewirkt die Rückstellkraft, die bei der Rotation der Druckwerkszylinder 2, 3 bei laufender Maschine der Zylinderdurchbiegung entgegenwirkt.

Wie aus der Fig. 2 weiter zu erkennen ist, kann bei den Druckwerkzylindern 2, 3 die Bohrung 11 konzentrisch zur Rotationsachse 13 der Druckwerkszylinder 2, 3 liegen. Bei den weiteren Druckwerkzylinder 4, 5 können die Bohrungen 11 auch dem Kanal 6 gegenüberliegend angeordnet sein, wie auch eine konzentrisch zur Rotationsachse angeordnete Bohrung ausgeführt sein kann. Die Hohlräume 12 sind mit Verschlüssen 17 versehen.

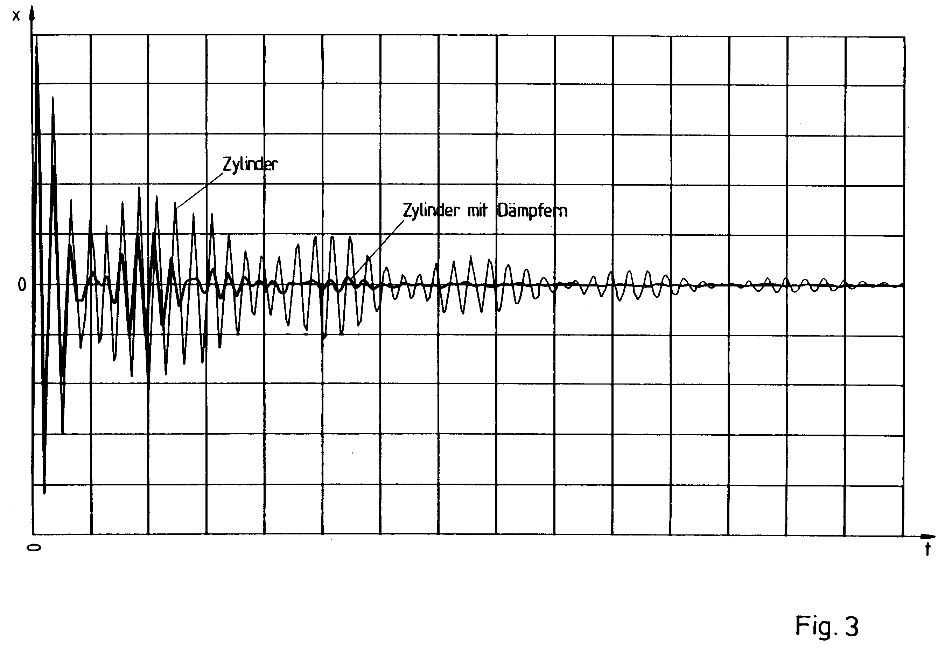

In Fig. 3 sind die Ausschwingkurven eines Druckwerkszylinders mit und ohne Dämpfung einander gegenübergestellt. Wie der Figur entnommen werden kann, liegen bei Zylindern mit Dämpfern sehr viel geringere Schwingungsamplituden vor als bei Serienzylindern. Zudem klingen die Schwingungen bei dem Zylinder mit Dämpfer sehr viel schneller ab. Dies ist der gegenphasigen Auslenkung zuzuschreiben, die die Schwingungsamplituden rasch reduziert und wirksam unterdrückt.

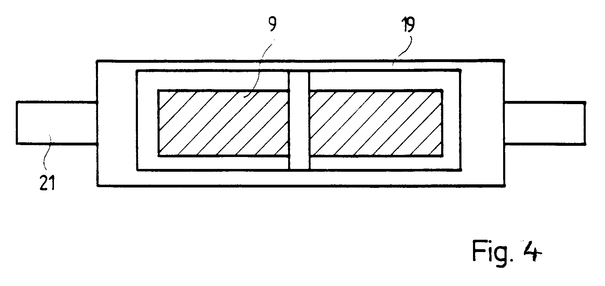

In Fig. 4 ist eine Einbauvariante von Zusatzmassen gezeigt, die insbesondere bei Hohlzylindern zur Ausführung kommen kann. Fig. 4 zeigt den Einbaufall, wenn bei genügendem Raumangebot die Biegestäbe 9 in schwerer Ausführung im Hohlzylinder 19 mit angeschraubten Zapfen 21 verwendet werden können.

### BEZUGSZEICHENLISTE

- 1: Papierbahn
- 2: Druckwerkzylinder
- 3: Druckwerkzylinder
- 4: weiterer Druckwerkzylinder
- 5: weiterer Druckwerkzylinder
- 6: Kanal
- 7: Farbauftragswalzen
- 8: Dämpfer
- 9: Biegestäbe
- 10: Halterung
- 11: Bohrung
- 12: Hohlraum
- 13: Rotationsachse
- 14: Zylindermantel
- 15: Stirnseite
- 16: Lager
- 17: Verschluß
- 19: Hohlzylinder
- 21: Zapfen

## Patentansprüche

1. Vorrichtung zur Dämpfung von Biegeschwingungen von Druckwerkzylindern mit in den Druckwerkzylindern (2, 3, 4 und 5) angeordneten Massen (9), die durch einen nach dem überrollen von Zylinderkanälen (6) auftretenden Stoß über den Mantel (14) der Druckwerkzylinder (2, 3, 4, 5) in Bewegung versetzbar sind, mit einer Schwingungen übertragenden Halterung (10) an welche die parallel zum Zylinderkanal (6) angeordneten Massen (9) befestigt sind, die von einer im Inneren des Zylindermantels (14) befindlichen Dämpfungsmasse umgeben sind, in welche die Schwingungen der Massen (9) dissipiert werden, wobei in mindestens einem Hohlraum (12) der mit Verschlüssen (17) versehen ist, zwischen den eine Bohrung (11) begrenzenden Flächen und gegenphasig auslenkbaren Massen (9), deren Eigenfrequenz der des jeweiligen Druckwerkzylinders (2, 3, 4, 5) entspricht, ein zur breitbandigen Abstimmung eines Dämpfers (8) austauschbares Dämpfungsfluid aufgenommen ist.

2. Vorrichtung nach Anspruch 1,
**dadurch gekennzeichnet**,
daß die Massen (9) als Biegestäbe ausgebildet sind, deren axiale Erstreckung ihre Durchmesser um ein mehrfaches übersteigt.

3. Vorrichtung nach Anspruch 2,
**dadurch gekennzeichnet**,
daß der Dämpfer (8), bestehend aus Biegestäben (9) in dem mit dem Dämpfungsfluid befüllten Hohlraum (12) konzentrisch zu der Rotationsachse (13) der Druckwerkzylinder (2, 3, 4, 5) gelagert ist.

4. Vorrichtung nach Anspruch 2
**dadurch gekennzeichnet**,
daß der Dämpfer (8) bestehend aus Biegestäben (9) in dem mit dem Dämpfungsfluid befüllten Hohlraum (12) dem Kanal (6) eines Druckwerkzylinders (2, 3, 4, 5) gegenüberliegend angeordnet ist.

5. Vorrichtung nach Anspruch 2,
**dadurch gekennzeichnet**,
daß der Dämpfer (8) bestehend aus Biegestäben (9) in den mit dem Dämpfungsfluid befühlten Hohlräumen (12) exzentrisch zur Rotationsachse (13) der Druckwerkzylinder (2, 3, 4, 5) angeordnet ist.

## Claims

1. Device for the damping of bending vibrations of printing-unit cylinders by means of masses (9) which are arranged in the printing-unit cylinders (2, 3, 4 and 5) and which can be set in motion via the casing (14) of the printing-unit cylinders (2, 3, 4, 5) by means of a jolt occurring after the rolling over of cylinder channels (6), with a vibration-transmitting mounting (10), to which are fastened the masses (9) which are arranged parallel to the cylinder channel (6) and are surrounded by a damping mass which is located inside the cylinder casing (14) and into which the vibrations of the masses (9) are dissipated, a damping fluid exchangeable for the purpose of wide-band tuning of a damper (8) being received in at least one cavity (12) provided with closures (17), between the faces limiting a bore (11) and masses (9) which can be deflected in phase opposition and the natural frequency of which corresponds to that of the respective printing-unit cylinder (2, 3, 4, 5).

2. Device according to Claim 1, characterized in that the masses (9) are designed as bending bars, the axial extension of which exceeds their diameter by a multiple.

3. Device according to Claim 2, characterized in that the damper (8) consisting of bending bars (9) is mounted concentrically to the axis of rotation (13) of the printing-unit cylinders (2, 3, 4, 5) in the cavity (12) filled with the damping fluid.

4. Device according to Claim 2, characterized in that the damper (8) consisting of bending bars (9) is arranged opposite the channel (6) of a printing-unit cylinder (2, 3, 4, 5) in the cavity (12) filled with the damping fluid.

5. Device according to Claim 2, characterized in that the damper (8) consisting of bending bars (9) is arranged eccentrically to the axis of rotation (13) of the printing-unit cylinders (2, 3, 4, 5) in the cavities (12) filled with the damping fluid.

## Revendications

1. Dispositif d'amortissement de vibrations de flexion de cylindres de groupes d'impression, comprenant des masses (9) disposées dans les cylindres (2, 3, 4 et 5) des groupes d'impression et qui peuvent être mises en mouvement par un choc qui est produit sur l'enveloppe (14) des cylindres (2, 3, 4, 5) des groupes d'impression et qui est provoqué après le passage des canaux (6) des cylindres sur d'autres cylindres lors de leur rotation, ainsi qu'un support (10) transmettant les vibrations et auquel sont fixées les masses (9) disposées parallèlement au canal (6) du cylindre et entourées d'une masse d'amortissement qui se trouve à l'intérieur de l'enveloppe (14) du cylindre et dans laquelle les vibrations des masses (9) sont dissipées, un fluide d'amortissement interchangeable, en vue de l'accord d'un amortisseur (8) sur une large bande, étant logé dans au moins une cavité (12) qui comporte des obturateurs (17), entre les surfaces délimitant un trou (11) et les masses (9) qui peuvent subir une excursion en opposition de phase et dont la fréquence propre correspond à celle du cylindre respectif (2, 3, 4, 5) d'un groupe d'impression.

2. Dispositif selon la revendication 1, caractérisé en ce que les masses (9) sont constituées de barres de flexion, dont la dimension axiale est plusieurs fois supérieure à celle de leur diamètre.

3. Dispositif selon la revendication 2, caractérisé en ce que l'amortisseur (8), qui consiste en barres de flexion (9), est monté dans la cavité (12) emplie du fluide d'amortissement, concentriquement à l'axe de rotation (13) des cylindres (2, 3, 4, 5) des groupes d'impression.

4. Dispositif selon la revendication 2, caractérisé en ce que l'amortisseur (8), qui consiste en barres de flexion (9), est disposé dans la cavité (12) emplie du fluide d'amortissement, sur le côté opposé à celui du canal (6) d'un cylindre (2, 3, 4, 5) d'un groupe d'impression.

5. Dispositif selon la revendication 2, caractérisé en ce que l'amortisseur (8), qui consiste en barres de flexion (9), est monté dans la cavité (12) emplie du fluide d'amortissement, excentriquement à l'axe de rotation (13) des cylindres (2, 3, 4, 5) des groupes d'impression.
